Europäisches Patentamt

European Patent Office

Office européen des brevets

(19)

(11) Publication number: **0 197 460**
**A2**

# (12) EUROPEAN PATENT APPLICATION

(21) Application number: 86104296.8

(22) Date of filing: 27.03.86

(51) Int. Cl.⁴: **C08F 220/28** , C08G 18/62 , C09D 3/72

A request for correction of the description has been filed pursuant to Rule 88 EPC. A decision on the request will be taken during the proceedings before the Examintion Division (Guidelines for Examination in the EPO, A-V, 2.2).

(30) Priority: 02.04.85 US 718980

(43) Date of publication of application:
15.10.86 Bulletin 86/42

(84) Designated Contracting States:
AT BE CH DE FR GB IT LI NL

(71) Applicant: HENKEL CORPORATION
7900 West 78th Street
Minneapolis Minnesota 55435(US)

(72) Inventor: Roesler Richard R.
274 Kimberly Drive
New Brighton MN 55112(US)

(74) Representative: von Kreisler, Alek,
Dipl.-Chem. et al
Deichmannhaus am Hauptbahnhof
D-5000 Köln 1(DE)

(54) Acrylic polyols having low residual monomer content.

(57) Acrylic polyols are provided which are prepared from a comonomer mixture which contains a hydroxy-functional acrylate monomer, e.g. 2-hydroxyethyl methacrylate, and an ethylenically unsaturated compound having an electron donating group, e.g. styrene, which have a low residual monomer content and a narrow molecular weight distribution. Also provided is a method of preparing such acrylic polyols, methods of preparing polyurethane coatings from such acrylic polyols and the coatings produced thereby.

EP 0 197 460 A2

# ACRYLIC POLYOLS HAVING LOW RESIDUAL MONOMER CONTENT

### Field of the Invention

This invention relates to acrylic polyols having a low residual monomer content. More particularly, this invention relates to acrylate copolymers having a narrow molecular weight distribution and which are prepared from monomers comprised of hydroxy-functional acrylate monomer and an ethylenically unsaturated monomer having an electron donating group. This invention also relates to a method of preparing such acrylic polyols, methods of using such acrylic polyols, and urethane coatings prepared from such polyols.

## BACKGROUND OF THE INVENTION

Canadian Patent No. 856,347 to Schmidt and Taft discloses that the polymerization of acrylic monomers and other comonomers in a volatile solvent can be conducted in a pressurized reactor above the atmospheric boiling point of the solvent to obtain acrylic polymer compositions having a high solids content and a low viscosity.

It has been found, however, that acrylate polymers prepared by this method commonly contain up to 1% or more residual unreacted monomer. Such high concentrations of residual unreacted monomer are undesirable for many reasons including possible toxicity of the product, waste of starting materials, and an adverse effect upon the properties of coatings prepared therefrom.

## SUMMARY OF THE INVENTION

This invention relates to acrylic polyols having a narrow molecular weight distribution and a low residual monomer content prepared from monomers comprising a hydroxyfunctional acrylate monomer and an ethylenically unsaturated monomer containing an electron donating group. This invention also relates to a high pressure process comprising the high pressure polymerization of a hydroxy-functional acrylate monomer in the presence of an ethylenically unsaturated monomer having an electron donating group wherein said ethylenically unsaturated monomer is present in an amount sufficient to lower the residual monomer content of the resulting acrylic polyol.

This invention also relates to a method of preparing a urethane coating comprised of reacting an acrylic polyol as described above with a polyisocyanate compound on the surface of a substrate in the presence of a urethane catalyst and to coatings comprised of the reaction product of the above acrylic polyols with a polyisocyanate.

## DETAILED DESCRIPTION OF THE INVENTION

The acrylic polyols of the present invention are prepared by the addition polmerization of a mixture of ethylenic monomers containing at least one hydroxy-functional acrylate monomer and at least one ethylenically unsaturated monomer having an electron donating group.

Examples of suitable hydroxy-functional acrylate monomers include 2-hydroxyethyl acrylate, 2-hydroxyethyl methacrylate, 2-hydroxypropyl acrylate, 2-hydroxypropyl methacrylate, hydroxyisopropyl acrylate, hydroxyisopropyl methacrylate and commercially available mixtures of these monomers, as well as 4-hydroxybutyl methacrylate. The mixture of comonomers from which the acrylic polyols are prepared may also contain other hydroxyl-free comonomers. Examples of suitable hydroxyl-free ethylenically unsaturated monomers include the alkyl acrylates and methacrylates such as ethyl acrylate, butyl acrylate, 2-ethylhexyl acrylate, methyl methacrylate, ethyl methacrylate and butyl methacrylate. These hydroxyl-free acrylate monomers do not contain an electron donating group and so are not useful in lowering the residual monomer content of the final acrylic polyol, but are useful in affecting other properties of the polymer such as the glass transition temperature.

Examples of suitable ethylenically unsaturated monomers that have an electron donating group include vinyl aromatic compounds wherein the aromatic group is unsubstituted or has an electron donating substituent, e.g. styrene, alpha-methylstyrene, vinyltoluene, and p-methoxystyrene. Other suitable examples of ethylenically unsaturated monomers having an electron donating group include vinyl esters such as vinyl acetate and vinyl propionate and vinyl ethers such as methylvinylether and ethylvinylether.

The relative proportions of the above monomer used to prepare the acrylic polyols of this invention may vary considerably, depending upon the characteristics desired in the coating ultimately obtained and upon the actual identities of the monomers selected. It is therefore difficult to state the generally applicable ranges of values, however, it is to be noted that the characteristics of most interest in the acrylic polyol will be its hydroxyl value and glass transition temperature. The hydroxyl value of the monomer will be adjusted by varying the percentage and identify of the hydroxy-functional acrylate monomer, while the glass transition temperature of the acrylic polyol will depend in large part on the total monomer mix. It is therefore desirable, to select a level of hydroxy-functional acrylate monomer that will produce the desired hydroxyl number for the acrylic polyol, to then experimentally determine the amount of ethylenically unsaturated monomer having electron donating group necessary to lower the residual monomer content to the desired level, and then to adjust the glass transition temperature by the choice of an appropriate non-hydroxy-functional acrylate monomers. When the acrylic polyol is to be cured with a commonly available polyisocyanate material to yield a protective coating, it has been found that a particularly preferred monomer mixture is comprised of about 26% hydroxyethyl methacrylate, from about 20% to about 50% styrene and a balance of n-butyl acrylate and methyl methacrylate in relative proportions chosen to obtain the desired glass transition temperature.

The polymerization reaction useful in preparing the acrylic polyols of this invention is a free radical initiated polymerization conducted at a temperature in excess of the boiling point of solvents in which the acrylic polyol is commonly prepared. Suitable solvents include 2-ethoxyethyl acetate and mixtures of 2-ethoxyethyl acetate and xylene. A preferred solvent is methyl n-amyl ketone. In general, the monomers are polymerized in solution at a temperature between about 140°C and 220°C. Because these temperatures are above the atmospheric boiling point of the commonly used solvents, the reaction is conducted in a sealed reactor capable of withstanding elevated pressures, i.e. those in excess of 100 psi. The reaction is generally conducted in a reactor pressurized from about 60 to about 70 psi. The identity and amount of the free radical initiator are not critical and will generally depend upon the temperature at which the reaction is conducted. Examples of suitable free radical initiators include the organic peracids and peresters and the azobisnitriles, e.g. 2,2' azobis(2-methylpropanenitrile). A particularly preferred free radical initiator is t-butylperbenzoate which is generally used at a level from about 1 to about 3 weight percent based on the weight of the total reaction mixture.

It is an advantage of the acrylic polyols of this invention that they have a lower molecular weight and narrower molecular weight distribution than comparable commercially available acrylic polyols. In general, the weight average molecular weight will be below about 6,400, more preferably below about 5,000, and most preferably between about 2400 and 3900 and the number average molecular weight will be below about 2700, more preferably below about 2600 and most preferably from about 1100 to about 2100. The molecular weight distribution, defined as the weight average molecular weight divided by the number average molecular weight will generally be below 2.3, more preferably below 2.0, and most preferably below 1.8.

The polymerization reaction time is adjusted in relation to the temperature and level of free radical initiator necessary to obtain acrylic polyols having the molecular weights described above. Under the conditions described above, the use of an appropriate amount of the ethylenically unsaturated monomer having an electron donating group will yield an acrylic polyol having a residual monomer content is generally equal to or less than about 6.25% based on the weight of the total monomer charge. Residual monomer contents as low as about 0.75% have been achieved by the process of this invention.

While the lowest possible levels of residual monomer are desirable, it has been found that increasing the amount of the ethylenic monomer having an electron donating group, such as styrene, yields an acrylic polyol, which, when cured on a substrate with a polyisocyanate material, is susceptible to yellowing when exposed to long periods of ultraviolet radiation. When the acrylic polyols of this invention are used in decorative coating formulation wherein the yellowing of the coating is not perceptible, e.g. heavily pigmented coatings, or in maintenance coatings where yellowing is unobjectional, the residual monomer content can be most advantageously minimized in accordance with this invention.

The acrylic polyol compositions of this invention are particularly useful when reacted with at least one organic polyisocyanate compound or prepolymer.

Suitable organic polyisocyanate compounds include ethylene diisocyanate, trimethylene diisocyanate, hexamethylene diisocyanate, propylene-1,2-diisocyanate, ethylidene diisocyanate, cyclopentylene-1,3-diisocyanate, the 1,2-, 1,3-and 1,4-cyclohexylene diisocyanates, the 1,3-and 1,4-phenylene diisocyanates, polymethylene polyphenylene-isocyanates, the 2,4-and 2,6-tolylene diisocyanates, the 1,3-and 1,4-xylylene diisocyanates, bis (4-isocyanatophenyl)methane, 4,4'-diphenylpropane diisocyanates, bis (2-isocyanatoethyl) carbonate, 1,8-diisocyanato-p-menthane, 1-methyl-2,4,-diisocyanato-cyclohexane, the chlorophenylene diisocyanates, naphthalene-1,5-diisocyanate triphenylmethane-4,4',4"-triisocyanate, isopropylbenzene-alpha-4-diisocyanate, 5,6-bicyclo[2.2.1]hept-2-ene diisocyanate, 5,6-diisocyanato-butylbicyclo [2.2.1]-hept-2-ene and similar polyisocyanates.

Also of use in the present invention are trimethylene hexamethyl diisocyanate available fronm VEBA, heptadecyl (C17) diisocyanate, DDI 1410, an aliphatic C-36 diisocyanate, available from the Henkel Corporation of Minneapolis, Minnesota, and polymethylene polyphenyl isocyanates such as PAPI 135 available from Upjohn. Tolylene diisocyanate available from Allied Chemical, isophorone diisocyanate available from VERA are particularly useful. When the composition is to be cured to form a coating, polyisocyanate prepolymers, or adducts of organic polyisocyanate compounds, such as Desmodur N, an aliphatic triisocyanate available from Mobay can be used. Desmodur N is more particularly defined as the triisocyanate biurette formed from 3 moles of hexamethylene diisocyanate and 1 mole of water and has an isocyanate equivalent weight as later defined of 191 grams. Other adducts or prepoly-mers of the polyisocyanate include Mobay's Z4370 and Mobay's Mondur CB which are the isocyanurate prepolymer of isophorone diisocyanate and the trimethylol propane prepolymer of toluene diisocyanate, respectively.

The particular ratio of the polyisocyanate to acrylic polyol utilised in forming the urethane-forming compositions of the present invention will depend upon the particular use for which the composition is desired. When the urethane-forming composition is to be cured to form a coating, the ratio is chosen such that each hydroxy-functional group of the acrylic polyol will react on a 1:1 equivalent : equivalent stoichiometric basis with the isocyanate functionality of the polyisocyanate compound or prepolymer. It is quite feasible, however, to form the coatings used from about 80% to 120%, preferably from about 95% to 105% on a hydroxyl-isocyanate equivalent basis of the polyisocyanate to form the urethane product.

To determine the amount of the polyisocyanate required for a given mixture with a given acrylic polyol, the hydroxyl or ioscyanate equi, valent weight of the respective polyol or polyisocyanate is determined as that weight in grams of the material which contains 1 gram equivalent weight of the respective functional group. More particularly, to determine the number of equivalents in a given polyol the hydroxyl value is first determined by known methods and reported in milligrams of potassium hydroxide equivalent to the hydroxyl content of 1 gram of sample. The calculation to determine the hydroxyl equivalent weight is then given by the following equation:

$$\text{OH equivalent weight} = \frac{56,100}{\text{OH value}}$$

where 56,100 is the milligram equivalent weight of potassium hydroxide.

Alternatively if the weight percentage of the hydroxyl groups in the polyol is known, the hydroxyl equivalent is determined as follows:

$$\text{OH equivalent weight} = \frac{17 \times 100}{\text{wt \% OH}}$$

where 17 is the equivalent weight of the hydroxyl radical and the weight percent OH is the percentage of the polyol which is hydroxyl groups.

In similar fashion the isocyanate equivalent may be determined if the weight percent of the ioscyanate functional groups in the polyisocyanate is known. This equation is given below where 42 is

the molecular weight of an isocyanate functional group and the weight percent NCO is that portion of polyisocyanate made up of isocyanate functional groups.

$$\text{isocyanate equivalent weight} = \frac{42 \times 100}{\text{wt } \% \text{ NCO}}$$

If desired, various urethane catalyst may be employed to promote the reaction. Examples of such urethane catalysts include triethylene diamine, morpholine, N-ethyl-morpholine, dimethyl piperazine, triethyl amine, N, N, N', N'-tetramethylbutane-1,3-diamine, dibutyltin dilaurate, stannous octoate, stannous laurate, dioctyltin diacetate, lead octoate, stannous oleate, stannous tallate, dibutyltin oxide, and hexabutylditin as well as other art recognized urethane catalysts. Typical levels of the urethane catalyst are from about 0.001% to about 5% by weight of the urethane linking components.

The acrylic polyols can be used in coatings by simply mixing the acrylic polyol with a polyisocyanate and applying the resulting mixture onto the surface of a substrate to the desired coating thickness. The coating mixture may be applied in any manner which will achieve the desired thickness, e.g. brush, knife, spray, but in most industrial applications, air-spraying is preferred. A volatile organic solvent may be added to the coating mixture to reduce the viscosity thereof and facilitate the air-spray application to a given substrate, however, it is one of the advantages of the present invention that little, if any, additional solvent is needed in the coating mixture of the present invention.

A urethane catalyst, such as dibutyltin dilaurate, can be added to the coating mixture to catalyze the reaction between the hydroxyl groups of the acrylic polyol and the isocyanate groups of the polyisocyanate and thereby accelerate the cure of the coating. Other additives such as copolyols, e.g. glycerol or more complex polyols, and pigments, e.g. titanium dioxide, can also be added to vary the properties of the resulting coating.

EXAMPLES

The following examples show the preparation of representative acrylic polyols of this invention and the preparation of urethane coatings prepared therefrom.

EXAMPLES 1-15

ACRYLIC POLYOL PREPARATION

The acrylic polyols of the following examples were prepared by mixing the monomers 2-hydroxyethyl methacrylate (HEMA) or 2-hydroxyethyl acrylate (HEA) as the hydroxy-functional acrylate monomer, styrene (STY) as the ethylenically unsaturated monomer having an electron donating group, n-butyl acrylate (NBA) and methyl methacrylate (MMA) in the amounts shown in the following table to form a premix. This premix also contained t-butyl benzoate in an amount of 3.8 parts per hundred parts of the monomers as a polymerization catalyst. The solvent methyl n-amyl ketone in an amount of 30 parts by weight to 70 parts by weight of the monomers was then charged to a pressurized polymerization reactor. The reactor was flushed three times with dry nitrogen and sealed. The reactor was then heated to 180°C, pressurized to about 60-70 psi and maintained at that temperature plus or minus approximately 2°C. The premix was then added to the reactor at a constant rate over 105 minutes. The reactor and its contents were then held at 180°C for an additional two hours. The reactor was then cooled to 125°C and then vented until atmospheric pressure was reached. The reactor was then heated to reflux temperature, approximately 135°C and an additional amount of 0.38 parts by weight per hundred parts of the monomers of t-butylperbenzoate was added as a post-catalyst. The reactor and its contents were then held at reflux temperature for 1 1/2 hours. The reactor and its contents were then cooled to about 40°C to obtain a useful solution of the desired acrylic polyol in methyl n-amyl ketone as a solvent. This solution was then tested to determine its viscosity, the residual monomer content, and the weight average and number average molecular weight of the acrylic polyol. The results of these tests are shown in the following table.

The glass transition temperature of each acrylic polyol was estimated from the glass transition temperature of homopolymers of each of the monomers by the following equation:

$$\frac{1}{Tg} + \frac{W_a}{Tg_a} + \frac{W_b}{Tg_b} + \frac{W_c}{Tg_c} + \cdots$$

wherein $W_a$, $W_b$, and $W_c$, etc. is the weight fraction and $Tg_a$, $Tg_b$, $Tg_c$, etc. are the glass transition temperature (°K) of a homopolymer of each the monomers, respectively.

# TABLE I

## ACRYLIC POLYOL COMPOSITION AND PROPERTIES

| Example | 1 | 2 | 3 | 4 | 5 | 6 | 7 | 8 |
|---|---|---|---|---|---|---|---|---|
| **Formula** | | | | | | | | |
| MMA | 50 | 57 | 34 | 21 | 21 | 16 | 29 | 29 |
| STY | 8 | 12 | 35 | 48 | 48 | 42 | 29 | 29 |
| NBA | 16 | 5 | 5 | 5 | 5 | 16 | 16 | 16 |
| HEMA | 26 | 26 | 26 | 26 | 26 | 26 | 26 | 26 |
| HEA | - | - | - | - | - | - | - | - |
| Tg °C | 54 | 78 | 78 | 78 | - | 53 | 53 | - |
| **Final Product** | | | | | | | | |
| % Solids | 65.6 | 66.2 | 67.8 | 70.3 | 64.3 | 68.3 | 67.7 | 68.8 |
| Residual Monomer (wt. %) | 4.9 | 6.25 | 1.75 | 1.63 | 0.75 | 0.75 | 1.88 | 2.0 |
| Viscosity (poise) at 25°C | 6.3 | 25.2 | 16.8 | 38.0 | 27.6 | 13.3 | 7.9 | 7.3 |
| Mw | 2400 | 2700 | 2600 | 3600 | 3200 | 3200 | 2600 | 2400 |
| Mn | 1400 | 1500 | 1500 | 1900 | 2100 | 1700 | 1500 | 1400 |
| Mz | 4400 | 5000 | 4400 | 6700 | 4600 | 5800 | 4400 | 4100 |
| Mw/Mn | 1.73 | 1.78 | 1.72 | 1.92 | 1.49 | 1.87 | 1.72 | 1.70 |

## TABLE I (cont.)

### ACRYLIC POLYOL COMPOSITION AND PROPERTIES

| Example | 9 | 10 | 11 | 12 | 13 |
|---|---|---|---|---|---|
| **Formula** | | | | | |
| MMA | 32 | 32 | 19 | 19 | 54 |
| STY | 32 | 32 | 45 | 45 | 10 |
| NBA | 10 | 10 | 10 | 10 | 10 |
| HEMA | 26 | 26 | 26 | 26 | 26 |
| HEA | - | - | - | - | - |
| Tg °C | 66 | - | 66 | - | 66 |
| **Final Product** | | | | | |
| % Solids | 67.4 | 67.4 | 68.7 | 69.1 | 62.7 |
| Residual Monomer (wt. %) | 1.25 | 2.0 | 0.88 | 1.0 | 4.5 |
| Viscosity (poise) at 25°C | 11.3 | 9.0 | 21.2 | 25.5 | 8.5 |
| Mw | 2700 | 2600 | 3300 | 3300 | 3300 |
| Mn | 1500 | 1500 | 1800 | 2600 | 1900 |
| Mz | 4500 | 4700 | 5700 | 4200 | 6000 |
| Mw/Mn | 1.74 | 1.74 | 1.85 | 1.29 | 1.75 |

## TABLE I (cont.)

### ACRYLIC POLYOL COMPOSITION AND PROPERTIES

| Example | 14 | 15* |
|---|---|---|
| **Formulation %** | | |
| MMA | 29 | 29 |
| STY | 29 | 29 |
| NBA | 16 | 16 |
| HEMA | – | -26 |
| HEA | 26 | – |
| **Analysis** | | |
| % Solids | 68.3 | 66.1 |
| Residual Monomer (wt %) | 1.5 | 3.25 |
| Viscosity (poise) at 25°C | 9.7 | 1.7 |
| Mw | 3900 | 1500 |
| Mn | 1800 | 1100 |
| Mz | 8400 | 2400 |
| Mw/Mn | 2.16 | 1.47 |

\*   Reactor temperature raised to and maintained at 210°C.

55

EXAMPLES 16-24

PIGMENTED COATING PREPARATION

Representative examples of the acrylic polyols from Examples 1 through 15 were formulated into pigmented urethane coating compositions as follows.

In Examples 16-23, 801 g. of the acrylic polyol indicated in Table II were mixed with 531.09 g. of titanium dioxide pigment available from DuPont as R-960, 7.97 g. of ANTI-TERRA U available from BYK, 7.97 g. of CAB 551.01 available from Eastman, 100 g of methyl n-amyl ketone and 110.16 g. of methyl ethyl ketone. This mixture was ground until an N.S. 7 fineness of grind was achieved. To this ground mixture was added 198 g. of an isocyanate prepolymer available as Desmodur N 75 from Mobay. The resulting paint was mixed and airspray applied to Bonderite 1000 treated steel panels. The coatings were allowed to cure at ambient temperatures for a minimum of 10 days before testing. The properties of the coating formulations are shown in Table II.

The coatings prepared from the coating formulations described above had a film build, a pencil hardness as defined in ASTM D 3363-74 and an impact flexibility, forward and reverse, as defined in ASTM D 2794-74, as shown in the following Table III.

## TABLE II

### PIGMENT COATING FORMULATION PROPERTIES

| Example | Acrylic Polyol From Example | Viscosity #4 Ford Cup (sec) | Dry Time | |
|---------|------------------------------|------------------------------|-----------|-----------|
| | | | Tack Free (hrs) | Hard Dry (hrs) |
| 16 | 3 | 43 | 11.48 | 24 + |
| 17 | 4 | 66 | - | - |
| 18 | 6 | 45 | 9.39 | 24 + |
| 19 | 7 | 34 | 14.61 | 24 + |
| 20 | 9 | 37 | 10.43 | 19.83 |
| 21 | 13 | 36 | - | - |
| 22 | 11 | 51 | 9.39 | 20.87 |

TABLE III

MECHANICAL PROPERTIES OF COATINGS

| Example | Film Build | Pencil Hardness | Impact Flexibility Forward/Reverse |
|---|---|---|---|
| 16 | 1.75 | H | 25-30/4-5 |
| 17 | 2.5 | H - 2H | 15-20/1-2 |
| 18 | 2.15 | H | 20-25/3-4 |
| 19 | 1.25 | H | 100-120/- |
| 20 | 1.85 | H | 25-30/4-5 |
| 21 | 1.75 | H - 2H | 25-30/4-5 |
| 22 | 2.5 | H - 2H | 25-30/5-6 |

The coated panels were also tested for chemical resistance to various acids, bases and organic solvents in a 24 hour spot test wherein the following symbols have the following meanings.

N.E.: no effect

SLOG: slight loss of gloss

B: blistered

SL: slight

ABS: absorbed

S: softened

The solvents used in the 24 hour spot test were 40% sodium hydroxide, 10% aqueous hydrochloric acid, 10% aqueous acetic acid, zylene, commercially available unleaded gasoline, and trichloroethylene. (Spot test time for trichloroethylene reduced to 5 minutes). The results of the chemical resistance tests are shown in Table IV.

TABLE IV

CHEMICAL RESISTANCE OF COATINGS

| Example | 40% NaOH | 10% HCl | 10% Acetic Acid | Xylene | Unleaded Gasoline | Trichloro-ethylene |
|---|---|---|---|---|---|---|
| 16 | 5 N.E. | 5 N.E. | 4 SL B | 4 ABS | 4 SL ABS | 5 N.E. |
| 17 | 5 N.E. | 5 N.E. | 5 N.E. | 4 SL ABS | 5 N.E. | 5 N.E. |
| 18 | 5 N.E. | 5 N.E. | 4 SL ABS | 4 ABS | 4 ABS | 5 N.E. |
| 19 | 5 N.E. | 5 N.E. | 4 B | 4 ABS | 4 SL ABS | 5 N.E. |
| 20 | 5 N.E. | 4 SLOG | 4 B | 4 ABS | 4 SL ABS | 5 N.E. |
| 22 | 5 N.E. | 4 SLOG | 4 SLOG ABS | 4 ABS | 5 N.E. | 5 N.E. |
| 23* | 5 N.E. | 5 N.E. | 4 ABS | 4 ABS | 5 N.E. | 5 N.E. |
| 21 | 5 N.E. | 5 N.E. | 4 B | 4 ABS | 5 N.E. | 5 N.E |

\* Repeat of Eample 21 with coating cured 26 days on panel before testing as compared with 12.

The panels were subjected to a Q.U.V. accelerated weathering test in accordance with ASTM G-53-77. The gloss at 60/20° at the total number of hours, total exposure are indicated in Table V along with the 6 value for yellowing of the coatings as measured in accordance with ASTM E-313-73.

13

## TABLE V

### Q.U.V. ACCELERATED WEATHERING RESULTS

| Example | STY (%) of Acrylic Polyol | Initial | Gloss (60°/20°) at Total No. of Hours | | | | Yellowing (b Value) |
|---|---|---|---|---|---|---|---|
| | | | 191 | 452 | 692 | 864 | |
| 16 | 35 | 97/65 | 96/98 | 92/77 | 90/75 | 89/56 | 2.6 |
| 17 | 48 | 98/94 | 97/89 | 92/74 | 82/55 | 84/54 | 3.7 |
| 18 | 42 | 97/91 | 94/78 | 91/72 | 87/63 | 67/30 | 3.7 |
| 19 | 29 | 95/90 | 92/75 | 92/76 | 92/70 | 90/71 | 2.7 |
| 20 | 32 | 95/90 | 95/84 | 93/79 | 92/76 | 91/73 | 2.0 |
| 21 | 10 | 91/87 | 88/71 | 83/56 | 82/54 | 81/49 | 0.7 |
| 22 | 45 | 97/94 | 94/80 | 89/69 | 67/37 | 73/35 | 3.4 |
| 23 | 45 | 97/96 | 95/84 | 91/72 | 87/63 | 82/53 | 3.8 |

The results shown in Table V above illustrate that increasing the styrene content of the acrylic polyol appears to increase the tendency for the coating to yellow upon exposure to ultraviolet radiation, but does not seem to significantly affect the gloss of the coating.

## Claims

1. An acrylic polyol comprised of the addition polymerization product of a mixture of comonomers comprised of a hydroxy-functional acrylate and an amount of an ethylenically unsaturated monomer having an electron donating group sufficient to lower the residual monomer content of the acrylic polyol, wherein said acrylic polyol has a narrow molecular weight distribution.

2. An acrylic polyol in accordance with claim 1 wherein the molecular weight distribution of the acrylic polyol is such that the ratio of the weight average molecular weight to the number average molecular weight is less than about 2.3.

3. An acrylic polyol in accordance with claim 1 wherein the residual monomer content is less than about 4.4% by weight of the monomers.

4. An acrylic polyol in accordance with claim 1 wherein the ethylenically unsaturated monomer having an electron donating group is present in the monomer mixture from which the acrylic polyol is prepared in an amount greater than about 15% by weight of the monomer mixture.

5. An acrylic polyol in accordance with claim 1 wherein the ethylenically unsaturated monomer having an electron donating group is selected from the group of vinyl aromatic compounds wherein the aromatic group is unsubstituted or has an electron donating group.

6. An acrylic polyol in accordance with claim 5 wherein the vinyl aromatic compound is styrene.

7. An acrylic polyol in accordance with claim 1 wherein the hydroxy-functional acrylate monomer is 2-hydroxyethyl methacrylate or 2-hydroxyethyl acrylate.

8. An acrylic polyol in accordance with claim 1 wherein the hydroxy-functional acrylate monomer is 2-hydroxyethyl acrylate or 2-hydroxyethyl methacrylate, the ethylenically unsaturated monomer having an electron donating group is styrene which is present in an amount sufficient to lower the residual monomer content of the acrylic polyol to less than about 4.4% by weight of the monomers and wherein the molecular weight distribution of the acrylic polyol is such that the ratio of the weight average molecular weight to the number average molecular is less than about 2.3.

9. A method of preparing an acrylic polyol comprising reacting a mixture of comonomers comprised of a hydroxy-functional acrylate monomer and an amount of an ethylencially unsaturated monomer having an electron donating group sufficient to lower the residual monomer content of the acrylic polyol, at a temperature sufficient to yield an acrylic polyol having a narrow molecular weight distribution.

10. A process in acccordance with claim 9 wherein the polymerization is conducted in the presence of an organic solvent having an atmospheric boiling point below about 160°C and wherein the reactor is pressurized to maintain the reaction medium in the liquid state.

11. A method of using an acrylic polyol in accordance with claim 1 comprised of reacting an acrylic polyol in accordance with claim 1 with a polyisocyanate on the surface of a substrate to form a coating.

12. A urethane coating prepared by the method of claim 11.

# VON KREISLER   SCHÖNWALD   EISHOLD   FUES
# VON KREISLER   KELLER   SELTING   WERNER

PATENTANWÄLTE

Dr.-Ing. von Kreisler † 1973
Dr.-Ing. K. W. Eishold † 1981

Dr.-Ing. K. Schönwald
Dr. J. F. Fues
Dipl.-Chem. Alek von Kreisler
Dipl.-Chem. Carola Keller
Dipl.-Ing. G. Selting
Dr. H.-K. Werner

DEICHMANNHAUS AM HAUPTBAHNHOF
**D-5000 KÖLN 1**

European Patent Office

Munich

for the Receiving Section

EPA EPO-OEB
SG 1
Reçu:
1 1 APR 1986

AvK/IM                April 1, 1986

New European Patent Application
Applicant: Henkel Corporation
Title: Acrylic Polyols having low residual monomer content
priority; April 2,1985 USA 718 980
our ref. 88 AvK/IM

---

This is to confirm our telex of today, a copy of which is enclosed herewith, in writing.

Following amendments should be made to the specification filed with our REQUEST of March 26,1986:

Page 8, line 28: it should read "$1 = W_a$" instead of "$1 + W_a$".

Page 17, last line: "..compared with 12" should read "..compared with 21"

Page 18, line 4: "6 value..." should read "b value ....".

Please find enclosed 3 copies of each amended page.

Patent Attorney

Encls.

(Alek von Kreisler)

Telefon: (0221) 13 10 41 · Telex: 888 2307 dopa d · Telegramm: Dompatent Köln